# EUROPÄISCHE PATENTANMELDUNG

(11) **EP 1 323 973 A2**
(43) Veröffentlichungstag der Anmeldung: **02.07.2003**
(21) Anmeldenummer: 02024719.3
(22) Anmeldetag: 06.11.2002
(51) Int. Cl.: F16L 47/02

(54) **Flüssigkeits-oder dampfführendes System mit einer Fügezone aus einem coextrudierten Mehrschichtverbund**

(30) Priorität: 28.12.2001 DE 10164408
(71) Anmelder: Degussa AG, 40474 Düsseldorf (DE)
(72) Erfinder: Ries, Hans, Dr., 45772 Marl (DE); Monsheimer, Sylvia, 45721 Haltern am See (DE); Göring, Rainer, 46325 Borken (DE)

(57) **Zusammenfassung**

Ein flüssigkeits- oder dampfführendes System, das folgende Komponenten enthält:
I. Ein Anschlusselement,
II. einen coextrudierten Mehrschichtverbund,
III. einen Hohlkörper,
wobei die Komponenten I., II. und III. stoffschlüssig miteinander verbunden sind, ermöglicht eine dauerhaft feste Verbindung bei gleichzeitiger Reduzierung umweltschädlicher Emissionen.

## Beschreibung

Gegenstand der vorliegenden Erfindung ist eine Methode zur Verbindung von ein- oder mehrschichtigen Kunststoffhohlkörpern mit Anschlusselementen, wie z. B. Anschlussnippeln, Gewindestutzen, Verschlussdeckeln oder Ventilen. Die Verbindung wird mit Hilfe eines aus einem Coextrudat hergestellten Halb- oder Fertigzeugs durchgeführt.

Kunststoffhohlkörper werden meistens mittels Blasformen einschließlich aller Varianten hiervon, z. B. Saugblasformen, oder durch Extrusion hergestellt; es sind jedoch auch Ausführungen denkbar, bei denen der Hohlkörper aus tiefgezogenen extrudierten Platten, die zuvor thermogeformt wurden, zusammengeschweißt wird. Darüber hinaus sind auch Hohlkörper bekannt, die z. B. aus Polyamiden rotationsgesintert oder spritzgegossen werden. Denkbar ist auch, Rohre, die durch konventionelle Extrusion mittels einer Rohr- oder Scheibenkalibrierung oder aber mittels formgebender Backen (Prinzip des Wellrohrabzugs) hergestellt werden, an den Enden mit Verschlusskappen zu versehen und somit ebenfalls einen Behälter herzustellen. Unabhängig von der Art der Herstellung des Behälters ist dieser in der Regel mit Gewindeanschlüssen, Ausgieß- oder Einfüllstutzen und Öffnungen oder mit Nippeln zum Anschluss von Leitungen zu versehen. Dies gilt in besonderem Maße für Kraftstofftanks, bei denen zusätzlich zu Anschlussnippeln für Leitungen und Tankeinfüllstutzen auch noch verschiedene Ventile anzuschweißen sind.

Auch bei Rohrleitungen besteht häufig Bedarf, Abzweigungen, Ventile oder Deckel anzufügen.

Insbesondere bei Hohlkörpern, die aus Polyethylen als Hauptkomponente einer ein- oder mehrlagigen Wandung bestehen, tritt das Problem auf, dass eine dauerhafte Dichtung von Gewinde- oder Bajonettverschlüssen mit konventioneller Technik (Schraubverschluss und Gummidichtring) wegen der hohen Kriechneigung des Polyethylens nur schlecht zu realisieren ist. Das Problem verstärkt sich, wenn die zu speichernden oder zu führenden Flüssigkeiten (etwa Pflanzenschutzmittel, Lösemittel, Treibstoffe oder Öle) die Wand oder damit verbundene Komponenten anquellen oder wenn durch wechselnde Temperaturen die Werkstoffe wechselweise sich ausdehnen oder schrumpfen können. In diesem Falle ist es vorteilhaft, wenn das entsprechende Anschlusselement aus einem harten, nicht kriechenden und gegebenenfalls auch nur gering bis gar nicht quellenden Werkstoff besteht und auf die Behälter- oder Rohrwand aufgeschweißt oder mittels Umspritzen oder Umblasen mit dieser verbunden ist. Hierzu ist allerdings eine Verträglichkeit der in direktem Kontakt miteinander stehenden und miteinander zu verbindenden Werkstoffe erforderlich, da nur so eine dauerhaft belastbare und dichte Verbindung erreicht werden kann.

Im Falle eines Kunststoffkraftstoffbehälters tritt ein weiteres Problem auf. Im Rahmen der immer strengeren Anforderungen an die Reduzierung von Kohlenwasserstoffemissionen aus Kraftfahrzeugen werden diese Behälter heute überwiegend in mehrschichtiger Ausführung mit bis zu 6 Schichten hergestellt, wobei eine dieser Schichten eine gegen die Permeation von Kraftstoffkomponenten wesentlich stärker sperrende Schicht ist. Öffnungen, die in die Tankblase geschnitten werden, um Zusatzkomponenten anzuschweißen, stellen hinsichtlich der Permeation von Kraftstoffkomponenten allerdings eine Schwachstelle dar. Sind die auf die Öffnungen aufzuschweißenden Anschlusselemente aus dem gleichen Werkstoff wie der Tankdeckel, im Regelfall Polyethylen, so ist die Permeation an diesen Stellen höher als an anderen Stellen des Mehrschichtverbunds. Stand der Technik ist bisher überwiegend das Aufschweißen von Nippeln, Anschlüssen und Ventilen bzw. Ventildeckeln, die vollständig aus Polyethylen bestehen und keine gesonderte Sperrschicht aufweisen. Ein derartig konfektionierter Tank ist nicht mehr in der Lage, die immer schärfer werdenden Anforderungen sicher zu bestehen, wie sie z. B. unter den Stichworten "LEV-II" und "P-ZEV" aus der zukünftigen US-Emissionsschutzgesetzgebung nach CARB bekannt werden.

Neben einer permeationsarmen Abdeckung der Durchbrüche erweist sich auch die Anbindung von Leitungen an einen Kunststoffkraftstofftank als problematisch, da zwischen den aufgeschweißten Nippeln aus Polyethylen und den an diesen angebundenen Rohrleitungen aufgrund der Kriechneigung des Polyethylens schnell Leckagen entstehen können. Eine aus Kostengründen vorteilhafte Verbindung zwischen Nippel und Rohrleitung mittels sogenannter Schnellverbinder ist nicht möglich, da der Druck der O-Ring-Dichtungen zu einem Kriechen des Polyethylens und damit sehr bald zu unzulässigen Leckagen führt. Ähnliches gilt für die Verbindung von Tankeinfüllstutzen und Tank. Aus diesem Grunde werden derartige Verbindungen in der Regel mit Hilfe von kurzen Elastomerschläuchen und Bandschellen ausgeführt. Die Leckage kann durch Verwendung von Elastomerschläuchen zwar vermieden werden; in diesem Fall stellen aber die Schläuche selbst die Schwachstelle dar, da sie in hohem Maße durchlässig gegenüber Kohlenwasserstoffen sind. Schläuche aus sehr gut sperrenden Fluorelastomeren dagegen sind extrem teuer. Zudem ist die Verbindung von Polyethylennippel oder -stutzen mittels Gummischlauch auf ein nicht kriechendes Anschlusselement, z. B. aus glasfaserverstärktem Polyamid, aufwendig in der Herstellung und teuer. Somit besteht die Forderung, dass derartige Lösungen durch preiswertere und bessere Systeme abgelöst werden sollen.

Will man den Nippel direkt so ausführen, dass das Kriechen vermieden wird, so müssen hierzu glasfaserverstärkte Formmassen verwendet werden. Allerdings gibt es hierzu keine geeigneten verstärkten Polyethylentypen, die den weiteren mechanischen Anforderungen an die Verbindung gewachsen sind. Weiterhin ist die Festigkeit einer Schweißverbindung zwischen einem fasergefüllten und einem ungefüllten Polymer nicht ausreichend hoch. Es müssen also Komponenten gefunden werden, die sich auf der einen Seite mit dem Tankwerkstoff stoffschlüssig verbinden lassen, auf der anderen Seite aber bessere Eigenschaften hinsichtlich Sperrwirkung und Kriechneigung haben als z. B. Polyethylen.

Aus der DE-PS 42 39 909 ist eine Verbindung bekannt, mit der versucht wird, diese Probleme zu lösen. Dort wird ein rohrartiger Stutzen aus einem zum Kriechen neigenden Material A auf einer Seite mit einem zweiten Material B, welches eine geringe Kriechneigung aufweist, umspritzt. Im Kontaktbereich zwischen den beiden Materialien besitzt dieses rohrartige Gebilde also einen Schichtaufbau AB. Diese Verbindungstechnik hat sich jedoch in praktischen Versuchen nicht bewähren können. Bei Kraftstoffkontakt quillt das Material A nämlich stark auf. Da die Quellung zur einen Seite hin durch das Material B behindert wird, quillt und kriecht das Material in den anderen Richtungen weg, sodass nach einiger Zeit zum einen die Kraftübertragung, zum anderen die Dichtigkeit der Verbindung nicht mehr gewährleistet ist. Verstärkt wird diese Erscheinung noch bei mechanischer Belastung und/oder bei Austrocknung dieses rohrartigen Stutzens. Auch die vorgeschlagene Modifikation eines der beiden Werkstoffe zur Erzielung einer Haftung zwischen beiden verwendeten Formmassen führt eher zu einer Verschlechterung, da der modifizierte Werkstoff (im Regelfall das Polyethylen) noch stärker quillt und außerdem die Sperrwirkung durch die Modifikation deutlich schlechter wird.

In der DE-PS 195 35 413 wird eine Möglichkeit beschrieben, ein Anbindungselement aus zwei Werkstoffen A und B herzustellen, bei dem zwischen den Werkstoffen A und B ein formschlüssiger Verbund vorliegt. Gleichzeitig ist zwischen A und B eine haftungsvermittelnde Formmasse eingebettet, die zusätzlich einen stoffschlüssigen Verbund ergibt. Der schwächer kriechende Werkstoff B kann auf einen Behälter, dessen Außenhaut aus einem mit B kompatiblen und verschweißbaren Werkstoff besteht, aufgeschweißt werden. Bei der Entwicklung dieses Bauteils hat es sich gezeigt, dass die Kompatibilisierung der beiden Werkstoffe und gleichzeitig die Realisierung der Verschweißbarkeit mit dem Tankwerkstoff ein schwierig zu lösendes Problem ist und somit nur wenige geeignete Werkstoffkombinationen unter hohem Aufwand entwickelt werden können. Auf der anderen Seite ist ein solches mittels Spritzgießen herzustellendes Element in der Regel auf einen Verbund zwischen zwei, in Ausnahmefällen zwischen drei, unterschiedlichen Formmassen beschränkt. Diese Begrenzung besteht primär aus dem Grund, dass die Werkstoffe nur dann eine innige chemische und damit belastbare Verbindung eingehen, wenn sie "Schmelze in Schmelze" mittels Coinjektionsverfahren verarbeitet werden. Elemente aus drei und mehr Werkstoffen müssen in der Regel über mehrstufige Verfahren hergestellt werden, bei denen jeweils eine Schmelze auf ein bereits erstarrtes Bauteil aufgespritzt wird (Overmolding-Verfahren). Hierbei ist in der Regel zum einen die Verbundhaftung deutlich schlechter als bei einer Verarbeitung Schmelze in Schmelze. Zum anderen sind zu viele kostenintensive Herstellschritte erforderlich, wenn drei oder mehr Werkstoffe aufeinander aufgebracht werden müssen.

Ein weiteres Problem im Falle der vorgenannten Anschlusselemente ergibt sich dadurch, dass durch das Aufschweißen eines Mehrkomponenten-Elements, das einen in Polyethylen ausgeführten Schweißflansch hat, auf die Polyethylen-Außenhaut des Tanks eine relativ dicke Polyethylen-Zwischenlage zwischen Sperrschicht des Tanks und der sperrenden Haut des Elements verbleibt, durch die Kraftstoffbestandteile zunächst zwischen Schweißflansch und Sperrschicht parallel zur Oberfläche diffundieren und dann am Anschlusselement vorbei ins Freie abgegeben werden können. Hier wäre es vorteilhaft, die sperrende Komponente des Anschlusselements oder des Ventildeckels so nah wie möglich an die Sperrschicht heranbringen zu können, um hiermit die zur Diffusion zur Verfügung stehende Durchtrittsfläche möglichst klein zu halten. Dem sind aber enge Grenzen gesetzt, da zum einen aus spritzgießtechnischen Gründen die Dicke der schweißbaren Flanschkomponente nicht beliebig reduziert werden kann. Zum anderen kann bei den üblichen Schweißverfahren, wie z. B. dem Spiegelschweißen, nicht beliebig viel Schmelze verdrängt und so die Dicke der Zwischenlage verkleinert werden. Verfügbarer Schweißdruck, Flexibilität der Tankblase und Erstarrungsgeschwindigkeit der zu fügenden Formmasse setzen dem enge Grenzen.

Die Aufgabe der vorliegenden Erfindung ist es daher, eine Möglichkeit zur Herstellung entsprechender Verbindungen vorzuschlagen, bei denen die oben genannten Probleme durch eine geeignete geometrische Ausgestaltung des Übergangsbereichs zwischen einem Hohlkörper, dessen Mantel an der äußeren Oberfläche aus einem Werkstoff A besteht, und einer an diesen anzubindenden zweiten Komponente, die zumindest eine Schicht aus dem Werkstoff B enthält, vermieden werden.

Insbesondere sollte nach einer Möglichkeit gesucht werden, diese Verbindung so zu realisieren, dass eine Vielzahl unterschiedlichster Werkstoffkombinationen einbezogen werden kann.

Diese Aufgabe wird durch ein Anbindungselement gelöst, das folgende Komponenten enthält:
I. Ein Anschlusselement sowie
II. einen coextrudierten Mehrschichtverbund, der aus mindestens zwei Schichten besteht,
wobei die Komponenten I. und II. stoffschlüssig miteinander verbunden sind.

Gegenstand der Erfindung ist auch ein flüssigkeits- oder dampfführendes System, das das erfindungsgemäße Anbindungselement enthält, wobei dieses, beispielsweise mittels Schweißen oder Umspritzen, mit dem ein- oder mehrschichtigen Hohlkörper verbunden ist.

Weiterhin ist Gegenstand der Erfindung ein ein- oder mehrschichtiger Hohlkörper, der mit dem coextrudierten Mehrschichtverbund oder mit dem erfindungsgemäßen Anbindungselement stoffschlüssig verbunden ist.

Das erfindungsgemäß verwendete Anschlusselement kann aus einer Formmasse bestehen, die unverstärkt, verstärkt oder gefüllt ist. Beispielsweise können Glas-, Kohlenstoff-, Aramidoder Metallfasern als Verstärkungsmittel verwendet werden. Die Formmasse kann auch mit elektrisch leitfähigen Additiven antielektrostatisch ausgerüstet sein. Ihre Polymerbasis besteht beispielsweise aus einem Polyamid wie etwa einem Polyphthalamid, PA46, PA6, PA66, PA612, PA1012, PA1212, PA11 oder PA12, einem Polyester wie etwa Polyethylenterephthalat, Polybutylenterephthalat, Polyethylen-2.6-naphthalat oder Polybutylen-2.6-naphthalat oder einem Fluorpolymer wie etwa Polyvinylidenfluorid. Es kann aber auch jedes andere Polymer verwendet werden, das ausreichende Steifigkeit und Beständigkeit gegenüber dem flüssigen oder dampfförmigen Medium aufweist, z. B. Polyphenylensulfid, gemischt aliphatisch/aromatisches Polyamid wie z. B. PA6T/MPMDT, Polyamidblends wie z. B. ULTRAMID® T oder TROGAMID® BX (PA6,3T/PA66-Blend) oder aliphatisches Polyketon.

Das Anschlusselement kann entweder einschichtig aufgebaut sein oder aus 2, 3, 4, 5 oder mehr Schichten bestehen. Eine Schicht hiervon kann beispielsweise eine Sperrschicht hinsichtlich des flüssigen oder dampfförmigen Mediums oder eine antielektrostatisch ausgerüstete Schicht sein.

Beispiele für geeignete Anschlusselemente sind Anschlussnippel, Gewindestutzen, Verschlussdeckel, Ventile, Bajonettverschlüsse, Schnellverbinder (Quickconnectoren), Gewindeflansche; aber auch der Anschluss ganzer Baugruppen ist möglich, wie z. B. Aktivkohlefiltern, Ausgleichsbehältern oder Filtergehäusen.

Der coextrudierte Mehrschichtverbund besitzt mindestens eine Schicht B, die mit dem Anschlusselement stoffschlüssig verbunden werden kann, sowie eine Schicht A, die mit dem Hohlkörper ebenfalls stoffschlüssig verbunden werden kann. Voraussetzung ist hier, dass die Schichten A und B durch Coextrusion miteinander stoffschlüssig verbunden werden können.

Hierfür stehen jedoch nur wenige bekannte Kombinationen zur Verfügung. In der Regel muss hier einer der verwendeten Werkstoffe modifiziert werden, was häufig mit einer Verschlechterung anwendungstechnischer Eigenschaften verbunden ist (z. B. geringere Sperrwirkung, höhere Quellung, schlechtere mechanische Eigenschaften). Beispiele für einen zweischichtigen Aufbau wären folgende Kombinationen:
Polyamid (hier und in den folgenden Beispielen gegebenenfalls mit Überschuss an Aminoendgruppen)/mit Maleinsäureanhydrid funktionalisiertes Polyethylen oder Polypropylen;
Polyamid/Polyester, der mit Hilfe eines funktionelle Gruppen tragenden Polymeren haftungsmodifiziert ist;
Polyamid/Polyester, der mit Hilfe von di- oder polyfunktionellen Verbindungen haftungsmodifiziert ist, wobei die funktionellen Gruppen beispielsweise Anhydrid, Epoxid, Oxazolin oder Isocyanat sein können;
Polyamid/Fluorpolymer, das mit Maleinsäureanhydrid funktionalisiert ist;
Polyamid/Fluorpolymer, das durch Zusatz eines Acrylat- bzw. Methacrylatcopolymeren haftungsmodifiziert ist.

Verwendet man zwischen den Schichten A und B eine Haftvermittlerschicht C, so können die Werkstoffe der Schichten A und B rein nach der Funktionsanforderung z. B. hinsichtlich Sperrwirkung, Verschweißbarkeit und Mechanik ausgewählt werden. Darüber hinaus ist es durch Hintereinanderschaltung mehrerer Haftvermittlerschichten (C1, C2 usw.) möglich, zwei Schichten A und B miteinander zu verbinden, die auf direktem Wege mit nur einer Haftvermittlerschicht C nicht zu verbinden wären.

Als weitere Schicht kann der coextrudierte Mehrschichtverbund eine Sperrschicht gegen Diffusion von Kraftstoff und dergleichen enthalten, beispielsweise aus EVOH. Um einen optimalen Schutz vor Permeation zu erzielen, werden die Sperrschichten des coextrudierten Mehrschichtverbunds und des Hohlkörpers bevorzugt so nahe wie möglich aneinander bzw. möglichst in Kontakt zueinander gebracht.

Der coextrudierte Mehrschichtverbund kann beispielsweise den Aufbau Polyethylen/Haftvermittler/EVOH/Haftvermittler/Polyamid oder Polyethylen/Haftvermittler/PVDF/Haftvermittler/Polyamid haben. Auch entsprechende Verbunde mit Polyestern, Polyacetalen, Polyphthalamid, Polyphenylensulfid oder anderen Schichtmaterialien sind möglich.

Die Zusammensetzung von erfindungsgemäß verwendbaren coextrudierten Mehrschichtverbunden ist beispielsweise in folgenden Schriften offenbart: EP-A-0 509 211, EP-A-0 569 683, EP-A-0 601 295, EP-A-0 618 390, EP-A-0 637 511, EP-A-0 649 739, EP-A-0 673 762, EP-A-0 686 797, EP-A-0 729 830, EP-A-0 878 509, EP-A-0 982 122, EP-A-1 031 411, EP-A-1 065 048, DE-A-100 64 333, DE-A-100 64 334 und DE-A-100 65 177, EP-A-0 777 578, EP-A-0 991 720, WO 200123796, US 5 736 610, EP-A-0 791 153, EP-A-0 731 307, EP-A-0 731 308, DE-A-198 03 134, EP-A-0 428 833, DE-A- 37 15 251, EP-A-0 912 330, EP-A-0 436 923, EP-A-0 925 913, US 6 176 268, EP-A-0 635 108, FR-A-2 707 724, EP-A-1 118 807 und EP-A-1 002 980.

Der coextrudierte Mehrschichtverbund besteht insbesondere aus 3, 4, 5, 6 oder mehr Schichten.

Der coextrudierte Mehrschichtverbund kann je nach Art der zu realisierenden Anbindung aus einer coextrudierten Folie oder Platte, einem coextrudierten Rohr (gegebenenfalls mittels Formbacken geformt) oder einem durch Coextrusionsblasformen oder Coextrusionssaugblasformen hergestellten Verbund bestehen. Gegebenenfalls werden passende Stücke hieraus ausgeschnitten oder ausgestanzt. Eine weitere Umformung des Mehrschichtverbundes vor der Verbindung mit dem Anschlusselement oder vor der Verbindung mit dem ein- oder mehrschichtigen Hohlkörper ist, falls erwünscht, beispielsweise durch Thermoformen oder Tiefziehen möglich; dies kann vor oder nach dem eventuellen Ausschneiden oder Ausstanzen erfolgen.

Der Hohlkörper ist beispielsweise ein Behälter oder ein Rohr. Beispiele hierfür sind Kunststoffkraftstoffbehälter bzw. -tanks, Behälter für Aktivkohlefilter, Ausperlbehälter, Filler Necks oder Rohrleitungen, beispielsweise für Kraftstoff, Bremsflüssigkeit, Hydraulikflüssigkeit oder Kühlflüssigkeit.

Die Verbindung des coextrudierten Mehrschichtverbunds mit dem Hohlkörper kann mittels üblicher Schweißverfahren erfolgen oder aber durch Einlegen in die Form, die zur Herstellung des Hohlkörpers mittels Blasformen oder Rotationssintern verwendet wird. Die Verbindung erfolgt in diesem Fall durch Anschmelzen der dem Behälterwerkstoff zugewandten Verbundoberfläche anhand gleichzeitiger chemischer Reaktion in der Grenzfläche oder anhand physikalischer Werkstoffkompatibilität. Die Verbindung mit dem Anschlusselement erfolgt dann über eine Schweißverbindung zwischen dem Anschlusselement und dem bereits am Hohlkörper angefügten Coextrusionsverbund.

Auf der anderen Seite ist es aber auch möglich, zuerst den Coextrusionsverbund mit dem Anschlusselement zu verbinden. Dies kann mittels Hinterspritztechnik durch Einlegen des Coextrusionsverbunds in ein Spritzgießwerkzeug und Hinterspritzen mit dem Material des Anschlusselements erfolgen oder aber durch Verschweißen des Coextrusionsverbunds mit dem Anschlusselement. Die anschließende Verbindung mit dem Hohlkörper erfolgt wiederum wie zuvor beschrieben durch Verschweißen oder durch Einlegen in das Formwerkzeug.

Analog der hier beschriebenen Vorgehensweise ist es beispielsweise auch möglich, Abzweigungen oder Laschen an Rohre anzufügen.

Der Hohlkörper kann einschichtig aufgebaut sein oder aus 2, 3, 4, 5, 6 oder mehr Schichten bestehen. Er kann insbesondere eine Sperrschicht und/oder eine antielektrostatisch ausgerüstete Schicht enthalten.

Im Folgenden soll die Erfindung mittels spezifischer Ausführungsformen beispielhaft erläutert werden.

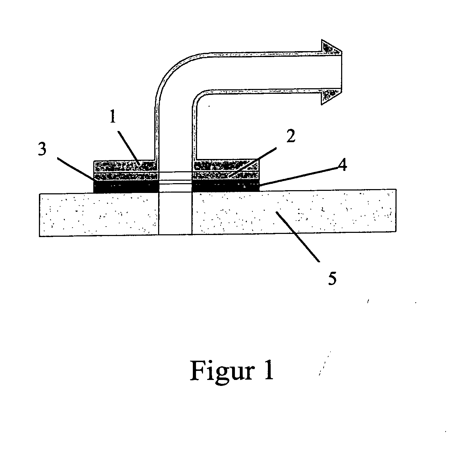

Die **Figur 1** zeigt einen spritzgegossenen Anschlussnippel **(1)** aus einem glasfasergefüllten Polyamid, der mit einer coextrudierten Folie bestehend aus einem Polyamid **(2),** einem funktionalisierten Polyethylen **(3)** und einem Polyethylen hoher Dichte (HDPE) **(4)** verbunden ist. Das so realisierte Element ist auf einen ein- oder mehrschichtigen Tank aus überwiegend HDPE **(5)** aufgeschweißt.

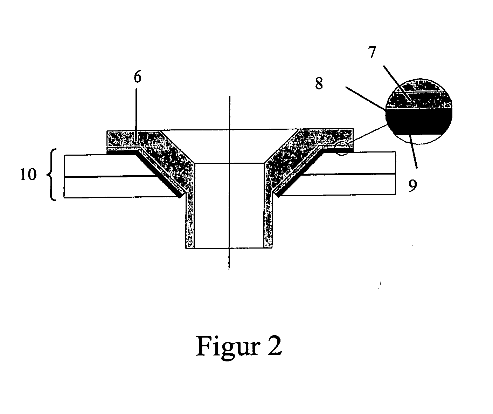

Eine weitere Ausführungsform ergibt sich gemäß **Figur 2** aus einer spritzgegossenen Buchse aus einem Polybutylenterephthalat **(6),** an deren Kragen ein mehrschichtiger, mittels Backenabzug (Wellrohrtechnik) hergestellter Konus angeschweißt ist. Der Konus hat den Schichtenaufbau Polybutylenterephthalat **(7)**/Haftvermittler **(8)**/HDPE **(9)** (Haftvermittler z.B. BYNEL® CXA 4157). Er ist auf einen mehrschichtigen Krafttstofftank **(10)** aufgeschweißt, der hier dreischichtig dargestellt ist, aber auch den Aufbau (von innen nach außen) HDPE/Haftvermittler/EVOH/Haftvermittler/Regranulat/HDPE besitzen kann. Entsprechende mehrschichtige Tanks sind Stand der Technik (z. B. Siewert, H., Thielen, M.:
Trends beim Coextrusionsblasformen, Kunststoffe 88 (1998) 8, S. 1218 ff.). Durch die konische Ausführung der Schweißstelle kann der Spalt zwischen der EVOH-Sperrschicht des Tanks und dem ebenfalls sehr gut gegen Kraftstoffe sperrenden Polybutylenterephthalat gegenüber einer eben ausgeführten Schweißverbindung (wie in Figur 1 dargestellt) reduziert werden, was die Permeationsverluste verringert. Eine entsprechende konische Ausführung der coextrudierten Komponente lässt sich auch durch das Thermoformen coextrudierter Platten oder Folien erzielen.

Entsprechend den weiteren Anforderungen an den Zweck der Anbindung kann die hier gezeigte Ausführung der Buchse variiert werden. So können in ihr z. B. zusätzliche Elemente, wie O-Ringe oder Haltevorrichtungen zur Abdichtung und Verriegelung eines gegebenenfalls einzuschiebenden Tankeinfüllstutzens, enthalten sein.

Eine weitere Verbesserung kann erzielt werden, wenn ein Schweißpartner wellenförmig ausgebildet wird. So kann, ausgehend von der in der **Figur 2** dargestellten Lösung, die Wand des mehrschichtigen Kraftstofftanks am Konus entlang heruntergezogen und dabei gewellt sein. Dies hat den Vorteil, dass beim Verschweißen an den Wellenbergen Material abgetragen wird; dieser Schmelzeabtrag wird von den Wellentälern aufgenommen. Durch den Materialabtrag kommt man zumindest stellenweise bis auf die Sperrschicht des Tanks, wodurch der Spalt zwischen der Sperrschicht des Tanks und der Sperrschicht des Konus noch weiter verringert wird.

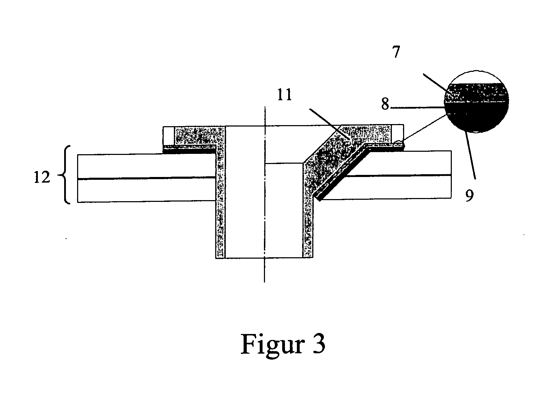

Als weiteres Beispiel sei die Anbindung eines Gewindeflansches **(11)** z. B. zur Befestigung der Pumpeneinheit am Tank **(12)** genannt **(Figur 3).** Der Gewindeflansch kann entweder, wie hier gezeigt, aus einem unverstärkten oder mit Glasfasern verstärkten Polybutylenterephthalat, oder aus einem Polyamid bestehen, das gegebenenfalls faserverstärkt ist. Der Aufbau des Coextrudats **(7; 8; 9)** entspricht dem in der Figur 2. (Falls der Gewindeflansch aus Polyamid besteht, wird die Schicht **(7)** ebenfalls aus Polyamid gebildet.) Je nach Ausführungsform des Flansches (eben oder konisch) wird die coextrudierte Zwischenlage entweder aus einer Folie ringsum ausgestanzt (eben) oder beispielsweise durch Tiefziehen aus einer ebenen Folie hergestellt (konisch). Die Verwendung anderer Werkstoffe wie z. B. Polyoxymethylen, Polyphthalamid oder Polyphenylensulfid ist ebenfalls erfindungsgemäß.

Um die Partner konisch miteinander verschweißen zu können, aber weiterhin mit einer ebenen Schweißfläche arbeiten zu können, bietet es sich an, die ohnehin vorhandenen Erhebungen im Tank, die der Versteifung dienen, zu nutzen. Diese werden durch einen ebenen Schnitt geöffnet, worauf dann an dieser Stelle die Verschweißung durchgeführt wird. Auch hierdurch wird, etwa im Vergleich zur Ausführungsform, die in der **Figur 1** gezeigt wird, die Permeation verringert.

Die Schichtenanordnung und Dicke der Einzelschichten im jeweiligen Coextrudat ist den Anforderungen an das Schweißverfahren bzw. Umspritzverfahren anzupassen. Besonders bewährt haben sich coextrudierte Mehrschichtverbunde, deren Außenschichten (d. h. die Schichten, die mit dem Verbindungskörper bzw. dem Anschlusselement verbunden werden) eine Dicke von 0,4 bis 1,5 mm haben. Selbstverständlich sind jedoch auch andere Schichtenverteilungen erfindungsgemäß.

Grundsätzlich gilt, dass beim Anschlusselement und beim Hohlkörper zumindest die zu verbindenden Schichten aus einem Thermoplasten bestehen. Eventuelle andere Schichten oder Partien können gegebenenfalls aus einem Duroplasten oder aus Metall bestehen. Beim coextrudierten Mehrschichtverbund bestehen alle Schichten aus einer thermoplastischen Formmasse.

Mit Hilfe der Erfindung kann eine dauerhaft feste Verbindung zwischen Anschlusselement und Hohlkörper bei gleichzeitiger Reduzierung umweltschädlicher Emissionen erzielt werden.

## Patentansprüche

1. Flüssigkeits- oder dampfführendes System, das folgende Komponenten enthält:
I. Ein Anschlusselement,
II. eine Fügezone aus einem coextrudierten Mehrschichtverbund, der aus mindestens zwei Schichten besteht,
III. einen Hohlkörper,
wobei die Komponenten I., II und III. stoffschlüssig miteinander verbunden sind.

2. System gemäß Anspruch 1,
**dadurch gekennzeichnet,**
**dass** das Anschlusselement ein Anschlussnippel, ein Gewindestutzen, ein Verschlussdeckel, ein Ventil, ein Bajonettverschluss, ein Schnellverbinder, ein Gewindeflansch, ein Aktivkohlefilter, ein Ausgleichsbehälter oder ein Filtergehäuse ist.

3. System gemäß einem der vorhergehenden Ansprüche,
**dadurch gekennzeichnet,**
**dass** die Polymerbasis des Anschlusselements aus einem Polyamid, einem Polyester, einem Fluorpolymer, einem Polyphenylensulfid oder einem aliphatischen Polyketon besteht.

4. System gemäß einem der vorhergehenden Ansprüche,
**dadurch gekennzeichnet,**
**dass** das Anschlusselement einschichtig aufgebaut ist.

5. System gemäß einem der Ansprüche 1 bis 3,
**dadurch gekennzeichnet,**
**dass** das Anschlusselement aus 2, 3, 4, 5 oder mehr Schichten besteht.

6. System gemäß Anspruch 5,
**dadurch gekennzeichnet,**
**dass** das Anschlusselement eine Sperrschicht enthält.

7. System gemäß einem der Ansprüche 5 und 6,
**dadurch gekennzeichnet,**
**dass** das Anschlusselement eine antielektrostatisch ausgerüstete Schicht enthält.

8. System gemäß einem der vorhergehenden Ansprüche,
**dadurch gekennzeichnet**
**dass** der coextrudierte Mehrschichtverbund aus einer Folie, einer Platte, einem Rohr oder einem durch Coextrusionsblasformen oder Coextrusionssaugblasformen hergestellten Verbund besteht.

9. System gemäß einem der vorhergehenden Ansprüche,
**dadurch gekennzeichnet,**
**dass** der coextrudierte Mehrschichtverbund vor der Verbindung mit dem Anschlusselement oder vor der Verbindung mit dem Hohlkörper umgeformt wurde.

10. System gemäß einem der vorhergehenden Ansprüche,
**dadurch gekennzeichnet,**
**dass** der Hohlkörper ein Behälter oder ein Rohr ist.

11. System gemäß Anspruch 10,
**dadurch gekennzeichnet,**
**dass** der Hohlkörper ein Kunststoffkraftstoffbehälter, ein Behälter für Aktivkohlefilter, ein Ausperlbehälter, ein Filler Neck, eine Kraftstoffleitung, eine Bremsflüssigkeitsleitung, eine Hydraulikflüssigkeitsleitung oder eine Kühlflüssigkeitsleitung ist.

12. System gemäß einem der vorhergehenden Ansprüche,
**dadurch gekennzeichnet,**
**dass** der Hohlkörper einschichtig aufgebaut ist.

13. System gemäß einem der vorhergehenden Ansprüche,
**dadurch gekennzeichnet,**
**dass** der Hohlkörper aus 2, 3, 4, 5, 6 oder mehr Schichten besteht.

14. System gemäß Anspruch 13,
**dadurch gekennzeichnet,**
**dass** der Hohlkörper eine Sperrschicht und/oder eine antielektrostatisch ausgerüstete Schicht enthält.

15. Anbindungselement, das folgende Komponenten enthält:
I. Ein Anschlusselement sowie
II. einen coextrudierten Mehrschichtverbund, der aus mindestens zwei Schichten besteht,
wobei die Komponenten I. und II. stoffschlüssig miteinander verbunden sind.

16. Verbund, der
II. einen coextrudierten Mehrschichtverbund, der aus mindestens zwei Schichten besteht, sowie
III. einen Hohlkörper
enthält, wobei die Komponenten II. und III. stoffschlüssig miteinander verbunden sind.

17. Verbund gemäß Anspruch 16, der zusätzlich
I. ein Anschlusselement
stoffschlüssig verbunden enthält.

18. Verwendung eines coextrudierten Mehrschichtverbunds mit mindestens 2 Schichten zur stoffschlüssigen Verbindung eines Anschlusselements mit einem Hohlkörper.
